(19) Europäisches Patentamt
European Patent Office
Office européen des brevets

(11) EP 0 681 014 B1

(12) # FASCICULE DE BREVET EUROPEEN

(45) Date de publication et mention de la délivrance du brevet:
**05.07.2000 Bulletin 2000/27**

(51) Int Cl.[7]: **C09D 183/04**, D06M 15/643

(21) Numéro de dépôt: **95420112.5**

(22) Date de dépôt: **26.04.1995**

(54) **Composition élastomère silicone et ses applications, notamment pour l'enduction de sac gonflable, destiné à la protection d'un occupant de véhicule**

Elastomerische Silikonen-Zusammensetzung und ihre Verwendung, hauptsächlich zum Beschichten von aufblasbaren Säcken, s.g. Airbags

Elastomeric silicone composition and its use, mainly coating of airbags

(84) Etats contractants désignés:
**AT BE CH DE DK ES FR GB GR IE IT LI LU NL PT SE**

(30) Priorité: **03.05.1994 FR 9405652**

(43) Date de publication de la demande:
**08.11.1995 Bulletin 1995/45**

(73) Titulaire: **RHODIA CHIMIE**
**92408 Courbevoie Cédex (FR)**

(72) Inventeurs:
- **Peccoux, Pierre-Michel**
  **F-69003 Lyon (FR)**
- **Lorenzetti, Dominique**
  **F-69300 Caluire (FR)**

(74) Mandataire: **Trolliet, Maurice et al**
**RHODIA SERVICES**
**Direction de la Propriété Industrielle**
**25, quai Paul Doumer**
**92408 Courbevoie Cédex (FR)**

(56) Documents cités:
**EP-A- 0 326 712**
**EP-A- 0 543 401**
**EP-A- 0 553 840**
**EP-A- 0 576 984**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 681 014 B1

## Description

Le domaine général de l'invention est celui des compositions élastomères silicones vulcanisables à froid, en particulier celles du type bicomposant (EVF II) réticulant par hydrosilylation ou polyaddition. Ces compositions réticulées sont adaptées, entre autres comme revêtement, par exemple de protection ou de renfort mécanique de différents substrats ou supports fibreux, tissés ou non.

De tels revêtements en silicone sont généralement obtenus par enduction du support (ou substrat) puis durcissement découlant de la polyaddition des groupements insaturés (alcényles, e.g. Si-Vi) d'un polyorganosiloxane sur des hydrogènes du même ou d'un autre polyorganosiloxane.

Ces compositions élastomères silicones ont trouvé un débouché important dans le revêtement des matériaux souples- tissés ou non - utilisés pour la fabrication de sacs de protection individuelle d'occupant de véhicules, dénommés également "airbag".

Pour plus de détails sur ces sacs de protection individuels ou "airbag", on peut se référer notamment au brevet français **N° 2 668 106**.

La présente invention concerne ainsi l'application des silicones e.g. (EVF II) dans la fabrication de tels sacs de protection.

Traditionnellement, ces derniers sont formés par une toile en fibre synthétique, par exemple en polyamide (Nylon)®, recouverte sur au moins l'une de ces faces d'une couche d'un élastomère du type chloroprène. La présence d'une telle couche ou d'un tel revêtement de protection est dicté par le fait que les gaz libérés par le générateur de gaz (monoxyde de carbone) en cas de choc, sont extrêmement chauds et contiennent des particules incandescentes susceptibles d'endommager le sac en Nylon®. La couche de protection interne en élastomère doit donc être particulièrement résistante aux hautes températures et aux contraintes mécaniques. Il importe également ce revêtement élastomère se présente sous la forme d'un film fin, uniforme et parfaitement adhérent au support en tissu synthétique, formant les parois de "l'airbag".

Une autre contrainte qui s'impose au revêtement élastomère est celle de la tenue au vieillissement, i.e. de la préservation dans le temps des propriétés thermiques, mécaniques et d'adhésion. Cette contrainte est d'autant plus aïgue que les sacs de protection individuelle sont stockés sous forme pliée dans les véhicules automobiles, avant leur éventuelle expansion salvatrice en cas d'accident.

Dernier critère, et non des moindres : le revêtement de protection ne doit pas poser de problèmes au regard de la fabrication par couture de "l'airbag".

Les compositions élastomères silicones ont aisément supplanté les chloroprènes dans cette application, car il s'est avéré que ces derniers ne répondent pas de façon satisfaisante à toutes les spécifications susvisées et présentent, en outre, le défaut d'être trop lourds, ce qui retarde l'expansion du sac gonflable.

C'est ainsi que la demande de brevet européen **n° 553 840** divulgue des compositions de revêtement élastomère silicone liquide, pour application au sac gonflable de protection individuelle dans les automobiles comprenant :

- **(A)** un polydiorganosiloxane ayant au moins deux groupements alcényles par molécule,
- **(B)** une résine polyorganosiloxane,
- **(C)** une charge inorganique,
- **(D)** un polyorganohydrogénosiloxane ayant au moins deux siliciums liés à l'hydrogène dans chaque molécule,
- **(E)** un catalyseur métallique du groupe du platine,
- **(F)** un composé organosilicié comprenant un groupement époxy,
- **(G)** et éventuellement un composé choisi parmi les alcools de type alcyne, utile comme inhibiteur de réticulation.

Ces compositions élastomères silicones connues souffrent notamment du grave inconvénient de ne pas adhérer suffisamment au tissu en polyamide du sac, pour garantir une fiabilité optimale, ô combien importante en matière de sécurité routière.

La présente invention vise à remédier aux inconvénients de l'art antérieur.

Dans cette perspective, l'un des objectifs essentiel de l'invention est de fournir une composition élastomère silicone d'enduction, e.g. du type EVF II, notamment pour application à des sacs gonflables de sécurité pour véhicules, présentant des propriétés optimales en matière de :

- résistance au feu et à la température,
- propriétés mécaniques,
- tenue au vieillissement,
- d'adhérence,
- de minceur,
- d'uniformité de surface,

- et de légèreté.

Un autre objectif de l'invention est de fournir une composition élastomère (EVF II) pour "airbag", qui soit facile à mettre en oeuvre et à appliquer et qui, en outre, soit économique.
Un autre objectif de l'invention est de fournir un procédé de revêtement de tissu de support fibreux tissé ou non pour sac gonflable de sécurité qui offre toutes les garanties de qualité, indispensables en matière de sécurité.
Ces objectifs parmi d'autres, sont atteints par l'invention qui concerne une composition élastomère silicone d'enduction du type de celles vulcanisables à froid (EVF) comprenant dans le mélange formé de :

**(I)** au moins un polyorganosiloxane présentant, par molécule, au moins deux groupes alcényles, en $C_2$-$C_6$ liés au silicium,
**(II)** au moins un polyorganosiloxane présentant, par molécule, au moint trois atomes d'hydrogène liés au silicium,
**(III)** une quantité catalytiquement efficace d'au moins un catalyseur, composé d'au moins un métal appartenant au groupe du platine,
**(IV)** un promoteur d'adhérence,
**(V)** éventuellement une charge minérale,
**(VI)** éventuellement au moins un inhibiteur de réticulation,
**(VII)** et éventuellement au moins une résine polyorganosiloxane,

caractérisée en ce que le promoteur d'adhérence comporte exclusivement :

**(IV.1)** au moins un organosilane alcoxylé contenant, par molécule, au moins un groupe alcényle en $C_2$-$C_6$,
**(IV.2)** au moins un composé organosilicié comprenant au moins un radical époxy,
**(IV.3)** au moins un chélate de métal M et/ou un alcoxyde métallique de formule générale : M $(OJ)_n$, avec n = valence de M et J = alkyle linéaire ou ramifié en $C_1$ - $C_8$,

M étant choisi dans le groupe formé par : Ti, Zr, Ge, Li, Mn, Fe, Al, Mg.
Il est du mérite de la Demanderesse d'avoir pu mettre en évidence un promoteur d'adhérence reposant sur la combinaison de trois groupes particuliers de composés et permettant d'atteindre, de façon tout à fait surprenante et inattendue, des performances de liaison avec le support à revêtir exceptionnellement élevées.
L'art antérieur ne divulguant l'emploi que d'un seul époxyfonctionnel à titre de promoteur d'adhérence, il n'était absolument pas prévisible que l'association d'un tel composé avec l'organosilane alcoxylé **(IV.1)** et le chélate (ou l'alcoxyde) **(IV.3)** selon l'invention conduirait, in fine, à une aussi nette amélioration des propriétés d'adhérence. Cela est d'autant plus étonnant que ce gain ne se perd pas au détriment des autres propriétés de dureté de résistance mécanique, d'uniformité de surface, et de résistance à la chaleur du revêtement silicone élastomère de type EVF II.
Conformément à l'invention, l'organosilane alcoxylé **(IV.1)** du promoteur **(IV)** est sélectionné parmi les produits de formule générale suivante :

**(IV.1)** 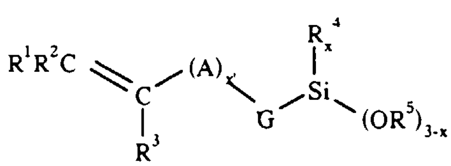

dans laquelle :

- $R^1$, $R^2$, $R^3$ sont des radicaux hydrogénés ou hydrocarbonés identiques ou différents entre eux et représentent, de préférence, l'hydrogène, un alkyle linéaire ou ramifié en $C_1$-$C_4$ ou un phényle éventuellement substitué par au moins un alkyle en $C_1$-$C_3$,
- A est un alkylène linéaire ou ramifié en $C_1$ - $C_4$,
- G est un lien valenciel ou l'oxygène,
- $R^4$ et $R^5$ sont des radicaux identiques ou différents et représentent un alkyle en $C_1$ - $C_4$ linéaire ou ramifié,
- x' = 0 ou 1,
- x = 0 à 2, de préférence 0 ou 1 et plus préférentiellement encore 0.

Sans que cela ne soit limitatif, il peut être considéré que le vinyltriméthoxysilane est un composé **(IV.1)** particulièrement approprié.

S'agissant du composé organosilicié **(IV.2)**, il est prévu conformément à l'invention, de le choisir

- soit parmi les produits **(IV.2a)** répondant à la formule générale suivante :

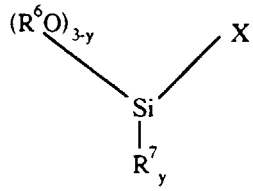

**(IV.2a)**

dans laquelle :

. $R^6$ est un radical alkyle linéaire ou ramifié en $C_1$ - $C_4$,
. $R^7$ est un radical alkyle linéaire ou ramifié
. y est égal à 0, 1, 2 ou 3, de préférence à 0 ou 1 et, plus préférentiellement encore à 0,
.

X =
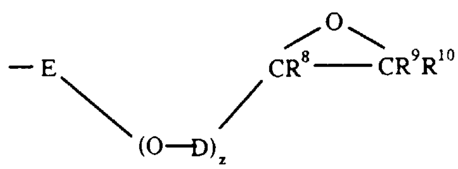

avec

Δ E et D qui sont des radicaux identiques ou différents choisis parmi les alkyles en $C_1$-$C_4$ linéaires ou ramifiés,
Δ z qui est égal à 0 ou 1,
Δ $R^8$, $R^9$, $R^{10}$ qui sont des radicaux identiques ou différents représentant l'hydrogène ou un alkyle linéaire ou ramifié en $C_1$-$C_4$, l'hydrogène étant plus particulièrement préféré,
Δ $R^8$ et $R^9$ ou $R^{10}$ pouvant alternativement constituer ensemble avec les deux carbones porteurs de l'époxy, un cycle alkyle ayant de 5 à 7 chaînons,

- soit parmi les produits **(IV.2b)** constitués par des polydiorganosiloxanes époxyfonctionnels comportant au moins un motif de formule :

$$X_p\, G'_q\, SiO_{\frac{4-(p+q)}{2}} \qquad (IV.2\ b_1)$$

dans laquelle :

- X est le radical tel que défini ci-dessus pour la formule (IV.2 a)
- G' est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- p = 1 ou 2,
- q = 0, 1 ou 2,
- p + q = 1, 2 ou 3.

éventuellement au moins une partie des autres motifs de ces polydiorganosiloxanes sont des motifs de formule moyenne :

$$G'_r SiO_{\frac{4-r}{2}} \qquad (IV.2\ b_2)$$

dans laquelle G a la même signification que ci-dessus et r a une valeur comprise entre 0 et 3, par exemple entre 1 et 3.

Les composés **(IV.2)** sont donc préférentiellement des époxyalcoxysiliciés et plus préférentiellement encore des époxyalcoxymonosilanes **(IV.2 a)**.

A titre d'exemple de tels composés **(IV.2)** on peut citer :

le 3-glycidoxypropyltriméthoxysilane **(GLYMO)**
ou le 3,4-époxycyclohexyléthyltriméthoxysilane...

En ce qui concerne le dernier composé essentiel **(IV.3)** du promoteur d'adhérence **(IV)** de l'élastomère silicone (EVF II) selon l'invention, les produits préférés sont ceux dans lesquels le métal M est choisi dans la liste suivante : Ti, Zr, Ge, Li, Mn. Il est à souligner que le titane est plus particulièrement préféré. On peut lui associer, par exemple, un radical alkyle de type butyle.

Selon l'invention, une combinaison avantageuse pour former le promoteur d'adhérence est la suivante : vinyltriméthoxysilane (VTMS) / 3-glycidoxypropyltriméthoxysilane (GLYMO)/titanate de butyle.

Sur le plan quantitatif, il peut être précisé que les proportions pondérales entre **(IV.1)**, **(IV.2)** et **(IV.3)**, exprimées en pourcentages en poids par rapport au total des trois, sont les suivantes :

**(IV.1)** ≥ 10, de préférence compris entre 15 et 70 et plus préférentiellement encore 25 à 65,
**(IV.2)** ≤ 90, de préférence compris entre 70 et 15 et plus préférentiellement encore 65 à 25,
**(IV.3)** ≥ 1, de préférence compris entre 5 et 25 et plus préférentiellement encore 8 à 18,

étant entendu que la somme de ces proportions en **(IV.1)**, **(IV.2)**, **(IV.3)** est égale à 100 %.

De façon tout à fait intéressante, il a pu être décélé une corrélation, d'une part, entre les performances d'adhérence et de structure du revêtement silicone élastomère, et d'autre part, le ratio pondéral **(IV.2)** : **(IV.1)**. Ainsi, ce ratio est de préférence compris entre 2 : 1 et 0,5 : 1, le ratio 2 : 1 étant plus particulièrement préféré.

Avantageusement, le promoteur d'adhérence est présent à raison de 0,1 à 10, de préférence 0,5 à 5 et plus préférentiellement encore 1 à 2,5 % en poids par rapport à l'ensemble des constituants de la composition.

Dans la variante selon laquelle la composition selon l'invention comprend, en outre, au moins une résine polyorganosiloxane **(VII)** comportant au moins deux restes alcényles, de préférence vinyles. Avantageusement, la résine **(VII)** répond à la structure suivante MM (Vi) D (Vi) DQ. Ce composé **(VII)** a pour fonction d'accroître la résistance mécanique du revêtement élastomère silicone ainsi que son adhérence, dans le cadre de l'enduction des faces d'un tissu synthétique (par exemple en polyamide), cousu pour former des "airbags". Cette résine de structure est avantageusement présente dans une concentration comprise entre 10 et 50 % en poids par rapport à l'ensemble des constituants de la composition, de préférence entre 20 et 40 % en poids et, plus préférentiellement encore, entre 25 et 35 % en poids.

Le polyorganosiloxane **(I)** est pondéralement l'un des constituants essentiel de la composition selon l'invention. Avantageusement, Il s'agit d'un produit présentant des motifs de formule :

$$T_a\ Z_b\ SiO_{\frac{4-(a+b)}{2}} \qquad (I.1)$$

dans laquelle :

- T est un groupe alcényle, de préférence vinyle ou allyle,
- Z est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- a est 1 ou 2, b est 0, 1 ou 2 et a + b est compris entre 1 et 3,

éventuellement au moins une partie des autres motifs sont des motifs de formule moyenne :

$$Z_cSiO_{\frac{4-c}{2}} \qquad (I.2)$$

dans laquelle Z a la même signification que ci-dessus et c a une valeur comprise entre 0 et 3, par exemple entre 1 et 3.

Il est avantageux que ce polydiorganosiloxane ait une viscosité au moins égale à 10 mPa.s, de préférence à 1000 mPa.s et plus préférentiellement encore comprise entre 5.000 et 200.000 mPa.s. A titre d'exemple de composé **(I)**, on peut citer le polydiméthylsiloxane.

Toutes les viscosités dont il est question dans le présent exposé correspondent à une grandeur de viscosité dynamique à 25° C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Le polyorganosiloxane **(I)** peut être uniquement formé de motifs de formule **(I.1)** ou peut contenir, en outre, des motifs de formule **(I.2)**. De même, il peut présenter une structure linéaire ramifiée cyclique ou en réseau. Son degré de polymérisation est, de préférence, compris entre 2 et 5 000.

Z est généralement choisi parmi les radicaux méthyle, éthyle et phényle, 60 % molaire au moins des radicaux Z étant des radicaux méthyle.

Des exemples de motifs siloxyle de formule **(I.1)** sont le motif vinyldiméthylsiloxane, le motif vinylphénylméthylsiloxane et le motif vinylsiloxane.

Des exemples de motifs siloxyle de formule **(I.2)** sont les motifs $SiO_{4/2}$, diméthylsiloxane, méthylphénylsiloxane, diphénylsiloxane, méthylsiloxane et phénylsiloxane.

Des exemples de polyorganosiloxanes **(I)** sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Le polyorganosiloxane **(II)** est de préférence du type de ceux comportant des motifs siloxyle de formule :

$$H_d\,L_e\,SiO_{\frac{4-(d+e)}{2}} \qquad (II.1)$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- d est 1 ou 2, e est 0, 1 ou 2, d + e a une valeur comprise entre 1 et 3,
- éventuellement, au moins une partie des autres motifs étant des motifs de formule moyenne :

$$L_g\,SiO_{\frac{4-g}{2}} \qquad (II.2)$$

dans laquelle L a la même signification que ci-dessus et g a une valeur comprise entre 0 et 3.

La viscosité dynamique $\eta_d$ de ce polyorganosiloxane **(II)** $\geq$ à 5 de préférence à 10 et, plus préférentiellement encore, est comprise entre 20 et 1000 mPa.s.

A titre d'exemples de polyorganosiloxane **(II)**, on peut citer le poly(diméthylsiloxane) (méthylhydrogénosiloxy) $\alpha,\omega$ diméthylhydrogénosiloxane.

Le polyorganosiloxane **(II)** peut être uniquement formé de motifs de formule (**II.1**) ou comporte en plus des motifs de fomule (**II.2**).

Le polyorganosiloxane (**II**) peut présenter une structure linéaire ramifiée cyclique ou en réseau. Le degré de polymérisation est supérieur ou égal à 2. Plus généralement, il est inférieur à 5 000.

Le groupe L a la même signification que le groupe Z ci-dessus.

Des exemples de motifs de formule (**II.1**) sont :

$$H(CH_3)_2SiO_{1/2}, \quad HCH_3SiO_{2/2}, \quad H(C_6H_5)SiO_{2/2}$$

Les exemples de motifs de formule (**II.2**) sont les mêmes que ceux donnés plus haut pour les motifs de formule (**I.2**).

Des exemples de polyorganosiloxane (**II**) sont :

- les diméthylpolysiloxanes à extrémités hydrogénodiméthylsilyle,
- les copolymères à motifs diméthyl-hydrogénométhylpolysiloxanes (diméthyl) à extrémités triméthylsilyle,
- les copolymères à motifs diméthyl-hydrogénométhylpolysiloxanes à extrémités hydrogénodiméthylsilyle,
- les hydrogénométhylpolysiloxanes à extrémités triméthylsilyle,
- les hydrogénométhylpolysiloxanes cycliques.

Le rapport du nombre d'atomes d'hydrogène lié au silicium dans le polyorganosiloxane **(I)** sur le nombre de groupes à insaturation alcényle de le polyorganosiloxane (**II**) est compris entre 0,4 et 10, de préférence entre 0,6 et 5.

Le polyorganosiloxane **(I)** et/ou le polyorganosiloxane (**II**) peuvent être dilués dans un solvant organique non toxique compatible avec les silicones.

Les polyorganosiloxane (**I**) et (**II**) en réseau sont dénommés couramment résines silicones.

Les bases de compositions silicones polyaddition peuvent ne comporter que des polyorganosiloxane **(I)** et (**II**) linéaires comme, par exemple, celles décrites dans les brevets : US-A-3 220 972, US-A-3 697473 et US-A-4 340 709 ou comporter à la fois des polyorganosiloxane **(I)** et (**II**) ramifiés ou en réseau, comme par exemple celles décrites dans les brevets: US-A-3 284 406 et US-A-3 434 366.

Les catalyseurs (**III**) sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets USA-3 419 593, US-A-3 715 334, US-A-3 377 432 et US-A-3 814 730. Le catalyseur généralement préféré est le platine. Dans ce cas, la quantité pondérale de catalyseur (**III**), calculée en poids de platine-métal, est généralement comprise entre 2 et 400 ppm, de préférence entre 5 et 200 ppm basés sur le poids total des polyorganosiloxanes (**I**) et (**II**).

La charge **(V)** éventuellement prévue est de préférence minérale. Elle peut être constituée par des produits choisis parmi les matières siliceuses (ou non).

S'agissant des matières siliceuses, elles peuvent jouer le rôle de charge renforçante ou semi-renforçante.

Les charges siliceuses renforçantes sont choisies parmi les silices colloïdales, les poudres de silice de combustion et de précipitation ou leur mélange.

Ces poudres présentent une taille moyenne de particule généralement inférieure à 0,1 μm et une surface spécifique BET supérieure à 50 $m^2/g$, de préférence comprise entre 150 et 350 $m^2/g$.

Les charges siliceuses semi-renforçantes telles que des terres de diatomées ou du quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 μm et une surface BET inférieure à 100 $m^2/g$.

De façon pratique mais non limitative, la charge employée est un mélange de quartz et de silice.

La charge peut être traitée par tout ou partie d'au moins l'un et/ou l'autre des composés **(IV.1)** à **(IV.3)** du promoteur **(IV)**.

Sur le plan pondéral, on préfère mettre en oeuvre une quantité de charge comprise entre 20 et 50, de préférence entre 25 et 35 % en poids par rapport à l'ensemble des constituants de la composition.

Avantageusement, la composition élastomère silicone comprend au moins un ralentisseur (**VI**) de la réaction d'addition (inhibiteur de réticulation), choisi parmi les composés suivants :

- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (Cf. **FR-B-1 528 464** et **FR-A-2 372 874**), qui font partie des bloqueurs thermiques de réaction d'hydrosilylation préférés, ont pour formule :

$$R - (R') C (OH) - C \equiv CH$$

formule dans laquelle,

- R est un radical alkyle linéaire ou ramifié, ou un radical phényle ;
- R' est H ou un radical alkyle linéaire ou ramifié, ou un radical phényle ;

les radicaux R, R' et l'atome de carbone situé en $\alpha$ de la triple liaison pouvant éventuellement former un cycle ; le nombre total d'atomes de carbone contenu dans R et R' étant d'au moins 5, de préférence de 9 à 20.

Lesdits alcools sont, de préférence, choisis parmi ceux présentant un point d'ébullition supérieur à 250° C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools $\alpha$-acétyléniques sont des produits du commerce.

Un tel ralentisseur **(VI)** est présent à raison de 3 000 ppm au maximum, de préférence à raison de 100 à 2000 ppm par rapport au poids total des organopolysiloxanes **(I)** et **(II)**.

De manière connue en soi, la composition élastomère silicone peut être additionnée de divers additifs classiques comme par exemple les colorants.

Avantageusement, la composition de l'invention présente une viscosité dynamique comprise entre 10 000 et 50.000, de préférence 15.000 à 30.000 mPa.s.

Selon un autre de ces aspects, la présente invention est relative à un système précurseur bicomposant de la composition silicone élastomère décrite supra. Un tel système précurseur se présente en deux parties **A** et **B** distinctes, destinées à être mélangées pour former la composition, l'une de ces parties **A** ou **B** comprenant le catalyseur **(III)** et une seule espèce **(I)** ou (**II**) de polyorganosiloxane. Une autre caractéristique de ce système précurseur est que sa partie **A** ou **B** contenant le polyorganosiloxane (**II**) est exempt de composés **(IV.3)** du promoteur **(IV)** et sa partie **A** ou **B** incluant le composé **(IV.1)** du promoteur **(IV)** ne comprend pas le catalyseur **(III)**.

C'est ainsi que la composition peut, par exemple, être constituée d'une partie **A** comprenant les composés **(IV.1)** et **(IV.2)** tandis que la partie **B** contient le composé **(IV.3)**.

Pour obtenir la composition élastomère silicone bicomposante **A-B**, on prépare tout d'abord un empatage primaire en mélangeant une charge minérale, au moins une partie de la résine **(VII)** ainsi qu'au moins une partie du polyorganosiloxane **(I)**.

Cet empatage sert de base pour obtenir, d'une part, une partie **A** résultant du mélange de ce dernier avec le polyorganosiloxane **(II)** éventuellement un inhibiteur de réticulation et enfin les composés **(IV.1)** et **(IV.2)** du promoteur **(IV)**. La partie **B** est réalisée par mélange d'une partie de l'empatage visé ci-dessus et de polyorganosiloxane **(I)** ainsi que de base colorante, de catalyseur (Pt) et de composés **(IV.3)** du promoteur **(IV)**.

La viscosité des parties **A** et **B** et de leur mélange peut être ajustée en jouant sur les quantités des constituants et en choisissant les polyorganosiloxanes de viscosité différente.

Une fois mélangées l'une à l'autre les parties **A** et **B** forment une composition élastomère silicone (EVF II) prête à l'emploi, qui peut être appliquée sur le support par tout moyen d'enduction approprié (par exemple râcle ou cylindre).

a réticulation de la compositon appliquée sur le support à revêtir peut être provoqué par voie thermique et/ou par rayonnement électromagnétique (UV).

Un autre objet de l'invention est l'utilisation de la composition élastomère ou de son système précurseur décrit ci-dessus, pour le revêtement ou l'enduction de support fibreux ou non, de préférence fibreux et plus préférentiellement encore de supports en fibres synthétiques avantageusement en polyester ou polyamide...

Dans ce contexte, l'invention vise plus particulièrement le revêtement ou l'enduction d'au moins une des faces du matériau souple (tissu en polyamide par exemple) utile pour la fabrication par couture de sacs gonflables pour la protection individuelle d'occupant de véhicules, en cas de choc.

Il s'ensuit que l'invention concerne, en outre, un tel sac gonflable constitué par une enveloppe en matériau souple, de préférence en tissu (par exemple synthétique : Nylon®), enduite sur au moins l'une de ses faces - face interne en général - de la composition selon l'invention.

Le revêtement que constitue la composition de l'invention après réticulation, assure une bonne protection des parois du sac vis-à-vis des hautes températures et des particules incandescentes générées lors du gonflage du sac. De plus, le film formé est uniforme, fin et possède de bonnes propriétés mécaniques et élastiques, qui ne s'altèrent

pas au stockage. Enfin et surtout, ce film est parfaitement adhérent au support (e.g. en polyamide) constituant le sac.

Les exemples, qui suivent, de préparation de la composition élastomère et de son application comme revêtement de tissu en polyamide, permettront de mieux comprendre l'invention et de faire ressortir ses avantages et ses variantes de réalisation. Les performances de la composition de l'invention seront mises en exergue par des tests comparatifs.

**EXEMPLES** :

Dans ces exemples, la viscosité est mesurée à l'aide d'un viscosimètre BROOKFIELD selon les indications de la norme AFNOR NFT 76 106 de mai 82.

**Exemple 1** :

*1.1. Préparation d'un empatage primaire*

Dans un mélangeur planétaire, on introduit, dans les proportions indiquées dans le tableau I ci-après:

- la résine **(VII)** de structure MM (Vi) D (Vi) DQ contenant environ 0,6 % en poids de groupes vinyles,
- le quartz broyé **(V)** (commercialisé par la Société SIFRACO),
- l'huile polydiméthylsiloxane **(I)** $\alpha,\omega$ (diméthylvinylsiloxy) de viscosité 100 000 mPa.s contenant environ 0,083 % molaire de groupements $(CH_3)_2(CH_2{=}CH)$ SiO 1/2,
- l'huile polydiméthylsiloxane **(I)** $\alpha,\omega$ (diméthylvinylsiloxy) de viscosité 10 000 mPa.s contenant environ 0,165 % molaire de groupements $(CH_3)_2(CH_2{=}CH)SiO1/2$,
- le mélange est porté à 120° C pendant 2 heures environ.

Après refroidissement, nous ajoutons la silice de pyrogénation **(V)** traitée par de l'octaméthylcyclotétrasiloxane.

*1.2. Préparation de la partie A du bicomposant*

Dans un réacteur à température ambiante, on mélange, dans les proportions indiquées dans le tableau I (sauf pour **(IV)** cf. tableau II) ci-après :

- l'empatage ci-dessus,
- l'huile **(II)** poly(diméthylsiloxy)(méthylhydrogénosiloxy) $\alpha,\omega$ diméthylhydrogénosiloxy, de viscosité 300 mPa.s et contenant 0,17 % molaire de groupements H,
- l'éthynylcyclohexanol **(VI)**,
- les promoteurs d'adhérence **(IV.1)** et **(IV. 2)**.

*1.3. Préparation de la partie **B** du bicomposant*

Dans un réacteur à température ambiante, on mélange, dans les proportions indiquées dans le tableau II (sauf pour **(IV)** cf tableau II) ci-après :

- l'empatage ci-dessus,
- l'huile **(I)** polydiméthylsiloxane $\alpha,\omega$ (diméthylvinylsiloxy) de viscosité 100 000 mPa.s, contenant environ 0,083 % molaire de groupements $(CH_3)_2(CH_2 = CH)$SiO 1/2,
- la base colorante,
- de Pt métal, catalyseur de réticulation **(III)** introduit sous la forme d'un complexe organométallique,
- les promoteurs d'adhérence **(IV.3)**.

*1.4. Préparation du bicomposant*

Le bicomposant est obtenu par mélange, à température ambiante de 100 parties en poids de la partie **A** et de 10 parties en poids de la partie **B**.

*1.5. Protocole d'application*

Le mélange est enduit à l'aide de râcles ou de cylindres sur tissu polyhexaméthylèneadipamide de type 6.6 et de grammage = 160 g/$m^2$, puis est réticulé 4 minutes à 150° C dans un four MATTHIS.

*1.6. Résultats*

Le tableau II ci-après présente d'une part, les données expérimentales de huit essais 1 à 8 et d'autre part les propriétés correspondantes pour deux quantités de composition déposée.
Le test de froissement (norme NFG 37 110) reflète l'adhérence et la tenue au vieillissement de la composition. Ce test consiste à soumettre le tissu, d'une part, à un mouvement de cisaillement à l'aide de deux mâchoires pinçant les deux bords opposés d'une éprouvette et animées d'un mouvement alternatif l'une par rapport à l'autre et, d'autre part, à une abrasion par contact avec un support mobile.
Les essais 1 à 4 sont des témoins négatifs dans lesquels le promoteur d'adhérence ne comprend seulement qu'un ou deux des constituants **(IV.1)** à **(IV.3)**.
Les essais 5 à 8 correspondent à différentes proportions des trois constituants **(IV.1)** à **(IV.3)** du promoteur **(IV)** selon l'invention.

**TABLEAU I**

| EMPATAGE (parties en poids) | | |
|---|---|---|
| RESINE (VII) | | 350,00 |
| QUARTZ BROYE SIFRACO C 600 | | 290,00 |
| HUILE (I) HAUTE VISCOSITE) = 100 000 mPa.s | | 232,00 |
| HUILE (I) BASSE VISCOSITE = 10 000 mPa.s | | 118,00 |
| SILICE AE 60 | | 10,00 |
| formules parties A et B (parties en poids) | | |
| | partie A | partie B |
| EMPATAGE | 100 | 9,40 |
| HUILE (II) | 4,25 | - |
| ETHYNYLCYCLOHEXANOL | 0,03 | - |
| HUILE (I) HAUTE VISCOSITE = 100 000 mPa.s | - | 0,80 |
| Base colorante à base de bleu de cromophtal 4 GNP commercialisé par CIBA GEIGY | - | 0,11 |
| Catalyseur (III) | - | 20 ppm Pt |
| Promoteur d'adhérence IV | Cf tableau II | |

## TABLEAU II

| ESSAIS | 1 | 2 | 3 | 4 | 5 | 6 | 7 | 8 |
|---|---|---|---|---|---|---|---|---|
| **partie A** : | | | | | | | | |
| TMVS (% m poids) **(IV.1)** | 1 | 0 | 0 | 0,5 | 0,5 | 1 | 0,5 | 1 |
| GLYMO (% en poids) **(IV. 2)** | 1 | 1 | 1 | 1 | 0,5 | 0,5 | 1 | 1 |
| **partie B** : | B1 | | | | B2 | B3 | B4 | B5 |
| Ti(OBu)4 (% en poids) **(IV.3)** | 0 | 0 | 4 | 0 | 1 | 2 | 2 | 4 |
| PROPRIETES CORRESPONDANTES | | | | | | | | |
| Dureté SHORE A | 49 | - | - | - | 45 | 42 | 44 | 46 |
| poids déposé en $g/m^2$ | 50 | 88 | 97 | 67 | 43 | 41 | 41 | 40 |
| Test de froissement (cycles) (norme NFG 37 110) | très faiblement adhérent | - | - | - | 350 | 400 | 600 | 500 |
| poids déposé, $g/m^2$ | - | - | - | - | 57 | 65 | 57 | 60 |
| Test de froissement | - | très faiblement adhérent | très faiblement adhérent | très faiblement adhérent | 300 | 300 | 900 | 700 |

**Revendications**

**1.** Composition élastomère silicone d'enduction du type de celles vulcanisables à froid (EVF) et comprenant le mélange formé de :

**(I)** au moins un polyorganosiloxane présentant, par molécule, au moins deux groupes alcényles, en $C_2$-$C_6$ liés au silicium,
**(II)** au moins un polyorganosiloxane présentant, par molécule, au moint trois atomes d'hydrogène liés au silicium,
**(III)** une quantité catalytiquement efficace d'au moins un catalyseur, composé d'au moins un métal appartenant au groupe du platine,
**(IV)** un promoteur d'adhérence,

**(V)** éventuellement une charge minérale,
**(VI)** éventuellement au moins un inhibiteur de réticulation,
**(VII)** et éventuellement au moins une résine polyorganosiloxane,

caractérisée en ce que le promoteur d'adhérence comporte exclusivement :

**(IV.1)** au moins un organosilane alcoxylé répondant à la formule générale suivante :

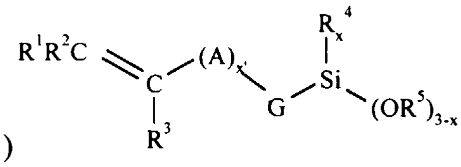

**(IV.1)**

dans laquelle :

- $R^1$, $R^2$, $R^3$ sont des radicaux hydrogénés ou hydrocarbonés identiques ou différents entre eux et représentant l'hydrogène, un alkyle linéaire ramifié en $C_1$ - $C_4$ ou un phényle éventuellement substitué par au moins un alkyle en $C_1$-$C_3$,
- A est un alkylène linéaire ou ramifié en $C_1$ - $C_4$,
- G est un lien valenciel,
- $R^4$ et $R^5$ sont des radicaux identiques ou différents et représentent un alkyle en $C_1$ - $C_4$ linéaire ou ramifié,
- x' = 0 ou 1
- x = 0 à 2,

**(IV.2)** au moins un composé organosilicié comprenant au moins un radical époxy,
**(IV.3)** au moins un chélate de métal M et/ou un alcoxyde métallique de formule générale M $(OJ)_n$, avec n = valence de M et J = alkyle linéaire ou ramifié en $C_1$ - $C_8$.
M étant choisi dans le groupe formé par : Ti, Zr, Ge, Li, Mn, Fe, Al, Mg.

**2.** Composition selon la revendication 1, caractérisée en ce que le composé organosilicié **(IV.2)** du promoteur **(IV)** est choisi :

- soit parmi les produits **(IV.2a)** de formule générale suivante :

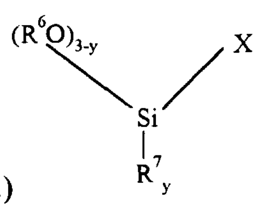

**(IV.2a)**

dans laquelle :

. $R^6$ est un radical alkyle linéaire ou ramifié en $C_1$ - $C_4$,
. $R^7$ est un radical alkyle linéaire ou ramifié
. y est égal à 0, 1, 2 ou 3,
.

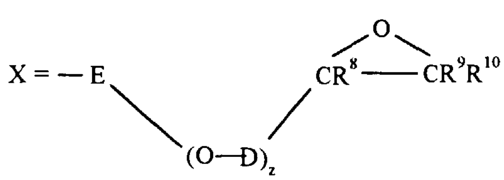

avec

Δ E et D qui sont des radicaux identiques ou différents choisis parmi les alkyles en $C_1$-$C_4$ linéaires ou ramifiés,
Δ z qui est égal à 0 ou 1,
Δ $R^8$, $R^9$, $R^{10}$ qui sont des radicaux identiques ou différents représentant l'hydrogène ou un alkyle linéaire ou ramifié en $C_1$-$C_4$,
Δ $R^8$ et $R^9$ ou $R^{10}$ pouvant alternativement constituer ensemble avec les deux carbones porteurs de l'époxy, un cycle alkyle ayant de 5 à 7 chainons,

- soit parmi les produits (**IV.2b**) constitués par des polydiorganosiloxanes époxyfonctionnels comportant au moins un motif de formule :

$$X_p\ G'_q\ SiO_{\frac{4-(p+q)}{2}} \qquad (IV.2\ b_1)$$

dans laquelle :

- X est le radical tel que défini ci-dessus pour la formule (IV.2 a)
- G' est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- p = 1 ou 2,
- q = 0, 1 ou 2,
- p + q = 1, 2 ou 3.

éventuellement au moins une partie des autres motifs de ces polydiorganosiloxanes sont des motifs de formule moyenne :

$$G'_r\ SiO_{\frac{4-r}{2}} \qquad (IV.2\ b_2)$$

dans laquelle G' a la même signification que ci-dessus et r a une valeur comprise entre 0 et 3.

**3.** Composition selon la revendication 1, ou la revendication 2 caractérisée en ce que le métal M du chélate et/ou de l'alcoxyde **(IV.3)** est choisi dans la liste suivante : Ti, Zr, Ge, Li, Mn.

**4.** Composition selon l'une quelconque des revendications 1 à 3 caractérisée en ce que le promoteur d'adhérence comprend :

- du vinyltriméthoxysilane (VTMS) (**IV.1**),
- du 3-Glycidoxypropyltiméthoxysilane (GLYMO) (**IV.2**),
- et du titanate de butyle (**IV.3**).

**5.** Composition selon l'une quelconque des revendications 1 à 4 caractérisée en ce que les proportions pondérales entre (**IV.1**), (**IV.2**) et (**IV.3**), exprimée en % en poids par rapport au total des trois, sont les suivantes :
(**IV.1**) ≥ 10,
(**IV.2**)≤ 90,
(**IV.3**) ≥ 1.

**6.** Composition selon la revendication 5 caractérisée en ce que le ratio pondéral (**IV.2**) : **(IV.1)** est compris entre 2 : 1 et 0,5 : 1.

**7.** Composition selon l'une quelconque des revendications 1 à 6 caractérisée en ce que le promoteur d'adhérence est présent à raison de 0,1 à 10 % en poids par rapport à l'ensemble des constituants.

**8.** Composition selon l'une quelconque des revendications 1 à 7 caractérisée en ce qu'elle contient en outre au moins

un résine polyorganosiloxane **(VII)** comportant au moins deux restes alcényles de préférence vinyles.

**9.** Composition selon la revendication 8, caractérisée en ce que la résine **(VII)** répond à la structure suivante MM (Vi) D (Vi) DQ.

**10.** Composition selon la revendication 1 caractérisée en ce que le polyorganosiloxane (I) présente des motifs de formule :

$$T_a Z_b SiO_{\frac{4-(a+b)}{2}} \qquad (I.1)$$

dans laquelle :

- T est un groupe alcényle,
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et a + b est compris entre 1 et 3,
- éventuellement au moins une partie des autres motifs sont des motifs de formule moyenne :

$$Z_c SiO_{\frac{4-c}{2}} \qquad (I.2)$$

dans laquelle Z a la même signification que ci-dessus et c a une valeur comprise entre 0 et 3.

**11.** Composition selon la revendication 1, caractérisée en ce que le polyorganosiloxane **(II)** comporte des motifs siloxyle de formule :

$$H_d L_e SiO_{\frac{4-(d+e)}{2}} \qquad (II.1)$$

dans laquelle :

- L est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- d est 1 ou 2, e est 0, 1 ou 2, d + e a une valeur comprise entre 1 et 3,
- éventuellement, au moins une partie des autres motifs étant des motifs de formule moyenne :

$$L_g SiO_{\frac{4-g}{2}} \qquad (II.2)$$

dans laquelle L a la même signification que ci-dessus et g a une valeur comprise entre 0 et 3.

**12.** Composition selon l'une quelconque des revendications 1 à 11, caractérisée en ce que les proportions de (**I**) et de (**II**) sont telles que le rapport molaire des atomes d'hydrogène liés au silicium dans **(II)** sur les radicaux alcényles liés au silicium dans (**I**) est compris entre 0,4 et 10.

**13.** Système bicomposant précurseur de la composition selon l'une quelconque des revendications 1 à 12 caractérisé

en ce qu'il se présente en deux parties **A** et **B** distinctes destinées à être mélangées pour former la composition en ce que l'une de ces parties **A** et **B** comprend le catalyseur (**III**) et une seule espèce (**I**) ou (**II**) de polyorganosiloxane.
et en ce que la partie **A** ou **B** contenant le polyorganosiloxane (**II**) est exempte de composé **(IV.3)** du promoteur **(IV)** et la partie **A** ou **B** incluant le composé **(IV.1)** du promoteur **(IV)** ne comprend pas le catalyseur (**III**).

**14.** Utilisation de la composition selon l'une quelconque des revendications 1 à 12 ou du système précurseur selon la revendication 13 pour l'enduction de support fibreux ou non.

**15.** Utilisation de la composition, selon la revendication 14, pour l'enduction de sac gonflable pour la protection d'un passager de véhicule.

**16.** Sac gonflable pour la protection d'un passager de véhicule caractérisé en ce qu'il est constitué par une enveloppe en matériau souple enduite sur au moins l'une de ses faces de la composition selon l'une quelconque des revendications 1 à 12.

**Patentansprüche**

**1.** Elastomere Siliconzusammensetzung zum Beschichten vom Typ derjenigen, die kalt vulkanisierbar sind (EVF) und die das aus

**(I)** wenigstens einem Polyorganosiloxan, das pro Molekül wenigstens zwei an das Silicium gebundene $C_2$-$C_6$-Alkenylgruppen aufweist,
**(II)** wenigstens einem Polyorganosiloxan, das pro Molekül wenigstens drei an das Silicium gebundene Wasserstoffatome aufweist,
**(III)** einer katalytisch wirksamen Menge wenigstens eines Katalysators, der aus wenigstens einem Metall, das der Gruppe des Platins angehört, besteht,
**(IV)** einem Haftungspromotor,
**(V)** gegebenenfalls einem mineralischen Füllstoff,
**(VI)** gegebenenfalls wenigstens einem Vernetzungsinhibitor
**(VII)** und gegebenenfalls wenigstens einem Polyorganosiloxanharz

gebildete Gemisch umfasst, dadurch gekennzeichnet, dass der Haftungspromotor ausschließlich umfasst:

**(IV.1)** wenigstens ein Alkoxyorganosilan, das der folgenden allgemeinen Formel:

(IV.1) 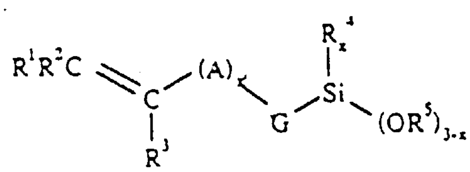

entspricht, in der

- $R^1$, $R^2$, $R^3$ untereinander gleiche oder verschiedene Wasserstoff- oder Kohlenwasserstoffreste sind und Wasserstoff, einen linearen oder verzweigten $C_1$-$C_4$-Alkylrest oder einen Phenylrest, der gegebenenfalls mit wenigstens einem $C_1$-$C_3$-Alkylrest substituiert ist, darstellen,
- A ein linearer oder verzweigter $C_1$-$C_4$-Alkylenrest ist,
- G eine Valenzbindung ist,
- $R^4$ und $R^5$ gleiche oder verschiedene Reste sind und einen linearen oder verzweigten $C_1$-$C_4$-Alkylrest darstellen,
- x' = 0 oder 1,
- x = 0 bis 2,

**(IV.2)** wenigstens eine Organosiliciumverbindung, die wenigstens einen Epoxidrest umfasst,
**(IV.3)** wenigstens ein Chelat eines Metalls M und/oder ein Metallalkoxid der allgemeinen Formel $M(OJ)_n$ mit n = Wertigkeit von M und J = linearer oder verzweigter $C_1$-$C_8$-Alkylrest,

wobei M aus der von Ti, Zr, Ge, Li, Mn, Fe, Al, Mg gebildeten Gruppe ausgewählt ist.

**2.** Zusammensetzung gemäß Anspruch 1, dadurch gekennzeichnet, dass die Organosiliciumverbindung **(IV.2)** des Promotors **(IV)** ausgewählt ist

- entweder unter den Produkten **(IV.2a)** der folgenden allgemeinen Formel:

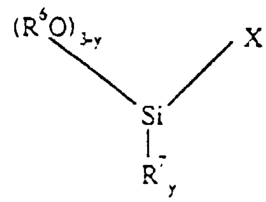

(IV.2a)

in der

- $R^6$ ein linearer oder verzweigter $C_1$-$C_4$-Alkylrest ist,
- $R^7$ ein linearer oder verzweigter Alkylrest ist,
- y gleich 0, 1, 2 oder 3 ist,
-

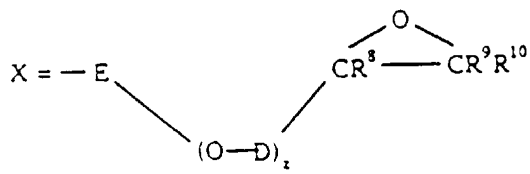

mit

Δ E und D, die gleiche oder verschiedene unter den linearen oder verzweigten $C_1$-$C_4$-Alkylresten ausgewählte Reste sind,
Δ z, das gleich 0 oder 1 ist,
Δ $R^8$, $R^9$, $R^{10}$, die gleiche oder verschiedene Reste sind, die Wasserstoff oder einen linearen oder verzweigten $C_1$-$C_4$-Alkylrest darstellen,
Δ wobei $R^8$ und $R^9$ oder $R^{10}$ alternativ zusammen mit den beiden Kohlenstoffen, die die Epoxidgruppe tragen, einen Alkylring mit 5 bis 7 Ringliedem bilden können,

- oder unter den Produkten **(IV.2b),** die aus Polydiorganosiloxanen mit Epoxidfunktionen gebildet werden, die wenigstens eine Grundeinheit der Formel:

$$X_p G'_q \, SiO_{\frac{4-(p+q)}{2}} \qquad (IV.2b_1)$$

umfassen, in der

- X der wie oben für die Formel **(IV.2a)** definierte Rest ist,
- G' eine einwertige Kohlenwasserstoffgruppe ohne schädliche Wirkung auf die Aktivität des Katalysators ist und unter den Alkylgruppen mit einschließlich 1 bis 8 Kohlenstoffatomen, die gegebenenfalls mit wenigstens einem Halogenatom substituiert sind, sowie unter den Arylgruppen ausgewählt ist,
- p = 1 oder 2,
- q = 0, 1 oder 2,
- p + q = 1, 2 oder 3;

gegebenenfalls sind wenigstens ein Teil der anderen Grundeinheiten dieser Polydiorganosiloxane Grundeinheiten der mittleren Formel:

$$G'_r SiO_{\frac{4-r}{2}} \qquad (IV.2\ b_2)$$

in der G' die gleiche Bedeutung wie oben hat und r einen Wert zwischen 0 und 3 hat.

3. Zusammensetzung gemäß Anspruch 1 oder Anspruch 2, dadurch gekennzeichnet, dass das Metall M des Chelats

und/oder des Alkoxids **(IV.3)** aus der folgenden Liste ausgewählt ist: Ti, Zr, Ge, Li, Mn.

**4.** Zusammensetzung gemäß einem der Ansprüche 1 bis 3, dadurch gekennzeichnet, dass der Haftungspromotor umfasst:

- Vinyltrimethoxysilan (VTMS) **(IV.1)**,
- 3-Glycidoxypropyltrimethoxysilan (GLYMO) **(IV.2)**,
- und Butyltitanat **(IV.3)**.

**5.** Zusammensetzung gemäß einem der Ansprüche 1 bis 4, dadurch gekennzeichnet, dass die Gewichtsanteile von **(IV.1)**, **(IV.2)** und **(IV.3),** ausgedrückt in Gew.-% bezogen auf die Summe der drei, die Folgenden sind:
**(IV.1)** $\geq 10$,
**(IV.2)** $\leq 90$,
**(IV.3)** $\geq 1$.

**6.** Zusammensetzung gemäß Anspruch 5, dadurch gekennzeichnet, dass das Gewichtsverhältnis **(IV.2)**:**(IV.1)** zwischen 2 : 1 und 0,5 : 1 liegt.

**7.** Zusammensetzung gemäß einem der Ansprüche 1 bis 6, dadurch gekennzeichnet, dass der Haftungspromotor in einer Menge von 0,1 bis 10 Gew.-%, bezogen auf die gesamten Bestandteile, vorliegt.

**8.** Zusammensetzung gemäß einem der Ansprüche 1 bis 7, dadurch gekennzeichnet, dass sie außerdem wenigstens ein Polyorganosiloxanharz **(VII)** enthält, das wenigstens zwei Alkenylreste, vorzugsweise Vinylreste, umfasst.

**9.** Zusammensetzung gemäß Anspruch 8, dadurch gekennzeichnet dass das Harz **(VII)** der folgenden Struktur MM (Vi) D (Vi) DQ entspricht.

**10.** Zusammensetzung gemäß Anspruch 1, dadurch gekennzeichnet, dass das Polyorganosiloxan **(I)** Grundeinheiten der Formel:

$$T_aZ_bSiO_{\frac{4-(a+b)}{2}} \qquad (I.1)$$

aufweist, in der

- T eine Alkenylgruppe ist,
- Z eine einwertige Kohlenwasserstoffgruppe ohne schädliche Wirkung auf die Aktivität des Katalysators ist und unter den Alkylgruppen mit einschließlich 1 bis 8 Kohlenstoffatomen, die gegebenenfalls mit wenigstens einem Halogenatom substituiert sind, sowie unter den Arylgruppen ausgewählt ist,
- a 1 oder 2 ist, b 0, 1 oder 2 ist und a + b zwischen 1 und 3 liegt,
- gegebenenfalls wenigstens ein Teil der anderen Grundeinheiten Grundeinheiten der mittleren Formel:

$$Z_cSiO_{\frac{4-c}{2}} \qquad (I.2)$$

sind, in der Z die gleiche Bedeutung wie oben hat und c einen Wert zwischen 0 und 3 hat.

**11.** Zusammensetzung gemäß Anspruch 1, dadurch gekennzeichnet, dass das Polyorganosiloxan **(II)** Siloxylgrundeinheiten der Formel:

$$H_dL_eSiO_{\frac{4-(d+e)}{2}} \qquad (II.1)$$

umfasst, in der

- L eine einwertige Kohlenwasserstoffgruppe ohne schädliche Wirkung auf die Aktivität des Katalysators ist und unter den Alkylgruppen mit einschließlich 1 bis 8 Kohlenstoffatomen, die gegebenenfalls mit wenigstens einem Halogenatom substituiert sind, sowie unter den Arylgruppen ausgewählt ist,

- d 1 oder 2 ist, e 0, 1 oder 2 ist und d + e einen Wert zwischen 1 und 3 hat,
- wobei gegebenenfalls wenigstens ein Teil der anderen Grundeinheiten Grundeinheiten der mittleren Formel:

$$L_gSiO_{\frac{4-g}{2}} \qquad (II.2)$$

sind, in der L die gleiche Bedeutung wie oben hat und g einen Wert zwischen 0 und 3 hat.

**12.** Zusammensetzung gemäß einem der Ansprüche 1 bis 11, dadurch gekennzeichnet, dass die Anteile von **(I)** und **(II)** derart sind, dass das Molverhältnis der an das Silicium gebundenen Wasserstoffatome in **(II)** zu den an das Silicium gebundenen Alkenylresten in **(I)** zwischen 0,4 und 10 liegt.

**13.** Zweikomponentiges Vorstufensystem der Zusammensetzung gemäß einem der Ansprüche 1 bis 12, gekennzeichnet

dadurch, dass es in zwei verschiedenen Teilen **A** und **B** vorliegt, die dazu bestimmt sind, gemischt zu werden, um die Zusammensetzung zu bilden, dadurch, dass einer dieser Teile **A** und **B** den Katalysator (III) und eine einzige Polyorganosiloxanspezies **(I)** oder **(II)** umfasst;

und dadurch, dass der Teil **A** oder **B**, der das Polyorganosiloxan **(II)** enthält, frei von Verbindung **(IV.3)** des Promotors **(IV)** ist und der Teil **A** oder **B**, der die Verbindung **(IV.1)** des Promotors **(IV)** enthält, nicht den Katalysator **(III)** umfasst.

**14.** Verwendung der Zusammensetzung gemäß einem der Ansprüche 1 bis 12 oder des Vorstufensystems gemäß Anspruch 13 für die Beschichtung von fasrigen oder nicht fasrigen Trägern.

**15.** Verwendung der Zusammensetzung gemäß Anspruch 14 zur Beschichtung von aufblasbaren Säcken für den Schutz eines Fahrzeuginsassen.

**16.** Aufblasbarer Sack für den Schutz eines Fahrzeuginsassen, dadurch gekennzeichnet, dass er aus einer Hülle aus einem weichen Material, das auf wenigstens einer seiner Seiten mit der Zusammensetzung gemäß einem der Ansprüche 1 bis 12 beschichtet ist, besteht.

## Claims

**1.** Silicone elastomer coating composition of the type of those capable of being vulcanized cold (CVE) and comprising the mixture made up of:

(I) at least one polyorganosiloxane containing, per molecule, at least two $C_2$-$C_6$ alkenyl groups bonded to silicon,
(II) at least one polyorganosiloxane containing, per molecule, at least three hydrogen atoms bonded to silicon,
(III) a catalytically effective quantity of at least one catalyst composed of at least one metal belonging to the platinum group,
(IV) an adhesiveness promoter,
(V) optionally an inorganic filler,
(VI) optionally at least one inhibitor of crosslinking,
(VII) and optionally at least one polyorganosiloxane resin,

characterized in that the adhesiveness promoter comprises exclusively:

(IV.1) at least one alkoxylated organosilane corresponding to the following general formula

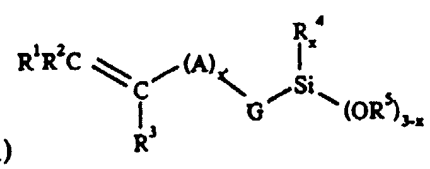

**(IV.1)**

in which:

- $R^1$, $R^2$ and $R^3$ are identical or different hydrogen or hydrocarbon radicals and denote hydrogen, a linear or branched $C_1$-$C_4$ alkyl or a phenyl optionally substituted by at least one $C_1$-$C_3$ alkyl,
- A is a linear or branched $C_1$-$C_4$ alkylene,
- G is a valency bond,
- $R^4$ and $R^5$ are identical or different radicals and denote a linear or branched $C_1$-$C_4$ alkyl,
- x' = 0 or 1,
- x = 0 to 2,

(IV.2) at least one organosilicon compound containing at least one epoxy radical
(IV.3) at least one chelate of metal M and/or a metal alkoxide of general formula: $M(OJ)_n$, with n = valency of M and J = linear or branched $C_1$-$C_8$ alkyl. M being chosen from the group formed by: Ti, Zr, Ge, Li, Mn, Fe, Al, Mg.

**2.** Composition according to claim 1, characterized in that the organosilicon compound (IV.2) of the promoter (IV) is chosen

- either from the products (IV.2a) corresponding to the following general formula:

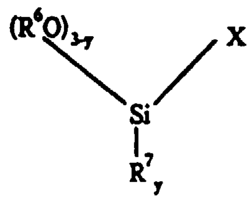

(IV.2a)

in which:

$R^6$ is a linear or branched $C_1$-$C_4$ alkyl radical,
$R^7$ is a linear or branched alkyl radical,
y is equal to 0, 1, 2 or 3,

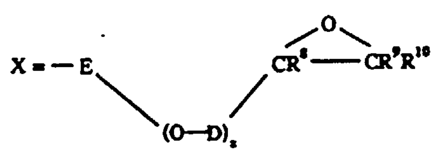

with

∆ E and D, which are identical or different radicals chosen from linear or branched $C_1$-$C_4$ alkyls,
∆ z, which is equal to 0 or 1,
∆ $R^8$, $R^9$ and $R^{10}$, which are identical or different radicals denoting hydrogen or a linear or branched $C_1$-$C_4$ alkyl, hydrogen being more particularly preferred,
∆ it being possible for $R^8$, $R^9$ and $R^{10}$ to form, together with the two carbons bearing the epoxy, a 5- to 7-membered alkyl ring,

- or from the products (IV.2b) consisting of epoxyfunctional polydiorganosiloxanes containing at least one unit of formula :

$$X_p\, G'_q\, SiO_{\frac{4-(p+q)}{2}} \qquad (IV.2\ b_1)$$

in which:

- X is the radical as defined above for formula (IV.2a)
- G' is a monovalent hydrocarbon group free from unfavourable action on the activity of the catalyst and chosen from alkyl groups containing from 1 tc 8 carbon atoms inclusive, optionally substituted by at least one halogen atom, and also from aryl groups,
- p = 1 or 2,
- q = 0, 1 or 2
- p + q = 1, 2 or 3

optionally at least a proportion of the other units of these polydiorganosiloxanes are units of average formula:

$$G'_r SiO_{\frac{4-r}{2}} \qquad (IV.2\ b_2)$$

in which G' has the same meaning as above and r has a value between 0 and 3.

**3.** Composition according to claim 1 or claim 2, characterized in that the metal M of the chelate and/or of the alkoxide (IV.3) is chosen from the following list: Ti, Zr, Ge, Li, Mn.

**4.** Composition according to any one of claims 1 to 3, characterized in that the adhesiveness promoter includes:

- vinyltrimethoxysilane (VTMS) (IV.1)
- 3-glycidoxypropyltrimethoxysilane (GLYMO) (IV.2),
- and butyl titanate (IV.3).

**5.** Composition according to any one of claims 1 to 4, characterized in that the weight proportions of (IV.1), (IV.2) and (IV.3), expressed in % by weight relative to the total of the three, are the following:
(IV.1) $\geq$ 10,
(IV.2) $\leq$ 90,
(IV.3) $\geq$ 1.

**6.** Composition according to claim 5, characterized in that the weight ratio (IV.2): (IV.1) is between 2:1 and 0.5:1.

**7.** Composition according to any one of claims 1 to 6, characterized in that the adhesiveness promoter is present in a proportion of 0.1 to 10 % by weight relative to all the constituents.

**8.** Composition according to any one of claims 1 to 7, characterized in that it additionally contains at least one polyorganosiloxane resin (VII) containing at least two alkenyl, preferably vinyl, residues.

**9.** Composition according to claim 8, characterized in that the resin (VII) corresponds to the following structure: MM (Vi) D (Vi) DQ.

**10.** Composition according to claim 1, characterized in that the polyorganosiloxane (I) has units of formula:

$$T_a Z_b SiO_{\frac{4-(a+b)}{2}} \qquad (I.1)$$

in which:

- T is an alkenyl group,
- Z is a monovalent hydrocarbon group free from unfavourable action on the activity of the catalyst and chosen from alkyl groups containing from 1 to 8 carbon atoms inclusive, optionally substituted by at least one halogen atom, and also from aryl groups,
- a is 1 or 2, b is 0, 1 or 2 and a + b is between 1 and 3,
- optionally at least a proportion of the other units are units of average formula:

$$Z_c\,SiO_{\frac{4-c}{2}} \qquad (I.2)$$

in which Z has the same meaning as above and c has a value of between 0 and 3.

**11.** Composition according to claim 1, characterized in that the polyorganosiloxane (II) contains siloxy units of formula:

$$H_d\,L_e\,SiO_{\frac{4-(d+e)}{2}} \qquad (II.1)$$

in which

- L is a monovalent hydrocarbon group free from unfavourable action on the activity of the catalyst and chosen from alkyl groups containing from 1 to 8 carbon atoms inclusive, optionally substituted by at least one halogen atom, and also from aryl groups,
- d is 1 or 2, e is 0, 1 or 2, d + e has a value of between 1 and 3,
- optionally at least a proportion of the other units being units of average formula:

$$L_g\,SiO_{\frac{4-g}{2}} \qquad (II.2)$$

in which L has the same meaning as above and g has a value of between 0 and 3.

**12.** Composition according to any one of claims 1 to 11, characterized in that the proportions of (I) and of (II) are such that the molar ratio of the hydrogen atoms bonded to silicon in (II) to the alkenyl radicals bonded to silicon in (I) is between 0.4 and 10.

**13.** Two-component precursor system of the composition according to any one of claims 1 to 12, characterized

in that it is in two distinct parts A and B which are intended to be mixed to form the composition in that one of these parts A and B includes the catalyst (III) and a single species (I) or (II) of polyorganosiloxane,

and in that part A or B containing the polyorganosiloxane (II) is free from compound (IV.3) of the promoter (IV) and the part A or B including the compound (IV.1) of the promoter (IV) does not include the catalyst (III).

**14.** Use of the composition according to any one of claims 1 to 12 or of the precursor system according to claim 13 for coating a support which may or may not be fibrous.

**15.** Use of the composition, according to claim 14, for coating an inflatable bag for the protection of a vehicle passenger.

**16.** Inflatable bag for the protection of a vehicle passenger, characterized in that it consists of an envelope made of flexible material coated on at least one of its faces with the composition according to any one of claims 1 to 12.